# EUROPEAN PATENT SPECIFICATION

(11) **EP 1 238 693 B1**
(45) Date of publication and mention of the grant of the patent: **20.06.2007**
(21) Application number: 02004633.0
(22) Date of filing: 28.02.2002
(51) Int. Cl.: B01D 35/02

(54) **Sump filter with filter element cartridge**
Ölwannenfilter mit Filterpatrone
Filtre pour carter d'huile avec une cartouche filtrante

(30) Priority: 02.03.2001 US 273169 P
(43) Date of publication of application: 11.09.2002
(73) Proprietor: FILTERTEK INC., Hebron, Illinois 60034 (US)
(72) Inventor: Boast, Andrew J., Fontana, Wisconsin 53125 (US); Larkin, Larry, Lake Geneva, Wisconsin 53147 (US)
(74) Representative: Brose, D. Karl

(56) References cited:
- DE-A- 19 735 444
- FR-A- 2 471 803
- GB-A- 2 171 024
- US-A- 2 057 779
- US-A- 3 310 173
- US-A- 3 382 984
- US-A- 3 688 908
- US-A- 3 841 489
- US-A- 4 052 315
- US-A- 4 640 771
- US-A- 4 828 694
- US-A- 4 839 041
- US-A- 4 985 142
- US-A- 5 533 478

## Description

### FIELD OF THE INVENTION

This invention relates to an automatic transmission sump filter assembly in fluid communication with the inlet of an automatic transmission fluid pump.

### BACKGROUND OF THE INVENTION

Since the advent of motor vehicles with automatic transmissions using transmission fluids, there has been a need to provide filtered fluid to the automatic transmission assembly. This is because an automatic transmission assembly includes frictional units that couple rotatable members to one or more planetary gear set members, and typically includes one or more fluid actuating devices such as a piston in order to engage and disengage the frictional units, for example. Such an automatic transmissions assembly requires not only tight tolerances between components, but also necessarily requires a source of clean lubricating fluid, also known as automatic transmission fluid, for effective and efficient operation.

A sump filter assembly of the above-identified kind is known from US-A-4,828,694 according to a prior proposal of the Applicant which is having a filter housing including a bottom portion and having a filter chamber, an inlet in fluid communication with the filter chamber. The filter chamber further is in fluid communication with an outlet member which angularly is extending from the housing, wherein the outlet member is including one or more stiffeners extending along the exterior of the outlet member. This prior construction however has the disadvantage that for maintenance purposes of the transmission, i.e. when the filter has to be changed together with the automatic transmission oil, the entire unit has to be exchanged and the used one has to be discarded which certainly is an economical disadvantage.

From the DE-A-1 973 5444 a filter insert is known which can be used in the oil sump of engines and transmissions. Again from the construction of this insert it is obvious that the entire filtering unit has to be exchanged for maintenance services.

From the GB-A-2 171 024 further a filter for the transmission fluid in an automobile is known in which two filtering elements are concentrically positioned in a housing provided with an inlet and an outlet. Again the entire unit consisting of the housing and the two concentric tubular filter elements have to be exchanged as a whole.

About the same is true with respect to the filter assembly known from US-A-4,640,771 in which again the housing containing the filter element has to be exchanged as a whole.

Various transmission fluid sump filters have been devised to provide a source of automatic transmission fluid that is free of debris or other material deleterious to the proper operation of motor vehicle automatic transmissions. The current desire to minimize the size of sump areas, due to the general desire to reduce the size of all motor vehicle components to lighten motor vehicles for environmental and fuel consumption concerns is at odds with providing a space of sufficient magnitude for a filter surface areas sufficient to provide for a source of clean transmission fluid for the serviceable life of the vehicle. Consequently, there is a need to provide a transmission fluid sump filter assembly that maximizes the filter surface area under the condition of a reduced sump size, and which is effective for filtering transmission fluid and yet relatively economical to fabricate, assemble, and install, and otherwise suited to its intended purpose as an automatic transmission sump filter. This need is of particular significance where a transmission fluid sump is configured as a small space and yet the filtering and dirt holding capacity of the sump filter is expected to match or exceed existing sump filters that are not dimensionally constrained.

### BRIEF SUMMPARY OF THE INVENTION

In an automatic transmission sump filter assembly of the above-identified kind the above task is solved by the combination of the following features:
(a) a filter housing including a bottom portion with one or more members extending from the bottom portion and adapted to engage the sump, having a filter chamber, an inlet in fluid communication with the filter chamber, and an outlet member in fluid communication with the filter chamber and angularly extending from the housing and defining the inlet of the automatic transmission fluid pump, wherein the outlet member includes one or more stiffeners extending along the exterior of the outlet member and terminating before the inlet of the automatic transmission fluid pump to form one or more ends;
(b) at least one outlet sealing member disposed on the outlet member and engaged against the one or more stiffener ends, wherein the outlet sealing member is in sealing engagement with the outlet member and the fluid pump inlet and, wherein the outlet sealing member abuts one or more stiffener ends;
(c) filtration material forming an envelope;
(d) a plastic filter element removably disposed in the filter chamber, the plastic filter element having a frame and a filtration material, the filtration material having at least one edge embedded in the frame and the frame having at least one shoulder adapted to receive at least one sealing member and,
(e) the said at least one sealing member disposed in said frame shoulder is in sealing engagement with the filter housing and the filter element.
Further advantageous details and features are covered by subclaims 2 to 11.

Preferred embodiments of the invention have the distinct advantage of providing an effective sump filter that maximizes the filter surface area under the condition of a reduced sump size, that is relatively economical to fabricate using conventional mold tooling,, and assemble, and install, and is otherwise ideally suited to its intended purpose.

Other features and advantages of the present invention will become more fully apparent from the following description of the preferred embodiments, the appended claims and the accompanying drawings.

### BRIEF DESCRIPTION OF SEVERAL VIEWS OF THE DRAWINGS

FIG. 1 is a perspective view of a partially assembled sump filter assembly of a first preferred embodiment of the present invention.

FIG. 2 is an elevational view of an assembled embodiment of the sump filter assembly of FIG. 1.

FIG. 3 is a top plan view of the sump filter assembly of FIG. 2.

FIG. 4 is a fragmentary bottom plan view of the sump filter assembly of FIG. 2.

FIG. 5 is a sectional view taken along line 5-5 of FIG. 2.

FIG. 6 is an enlarged view of the detail A of FIG 5.

FIG. 7 is a top plan view of a sump filter assembly of a second preferred embodiment of the present invention.

FIG. 8 is a side elevational view of the sump filter assembly of **FIG. 7.**

FIG. 9 is a fragmentary bottom plan view of the sump filter assembly of FIG. 7.

FIG. 10 is a bottom plan view of a preferred embodiment of the sump filter housing used in the filter assembly of FIG. 7.

FIG. 11 is an elevational view of the sump filter housing of FIG. 10.

FIG. 12 is a sectional view taken along line 12-12 of FIG. 10.

FIG. 13 is a sectional view taken along line 13-13 of FIG. 7.

FIG. 14 is a top plan view of a preferred embodiment of the filter element used in the filter assembly of FIG. 7.

FIG. 15 is a sectional view taken along line 15-15 of FIG. 14.

FIG. 16 is an enlarged view of the detail B of FIG. 15.

FIG. 17 is an elevational view of the filter element of FIG. 14 with the O-ring removed.

FIG. 18 is a sectional view taken along line 18-18 of FIG. 17.

### DETAILED DESCRIPTION OF EMODIMENTS OF THE INVENTION

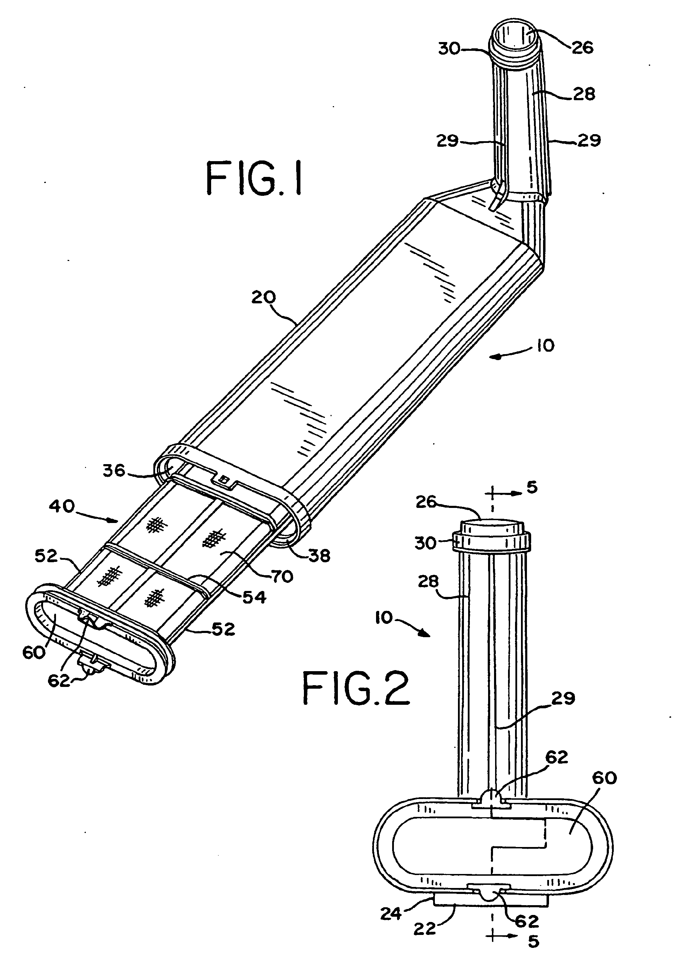

Referring to the drawings in greater detail, and first to Figs. 1-6, a sump filter assembly, generally designated 10, is depicted for motor vehicle transmission fluid sump applications. Sump filter assembly 10 is connectable to the inlet of a transmission fluid pump or conduit or the like in fluid communication with the inlet of a transmission fluid pump (not shown), and is disposed in a sump space that collects automatic transmission fluid in a motor vehicle.

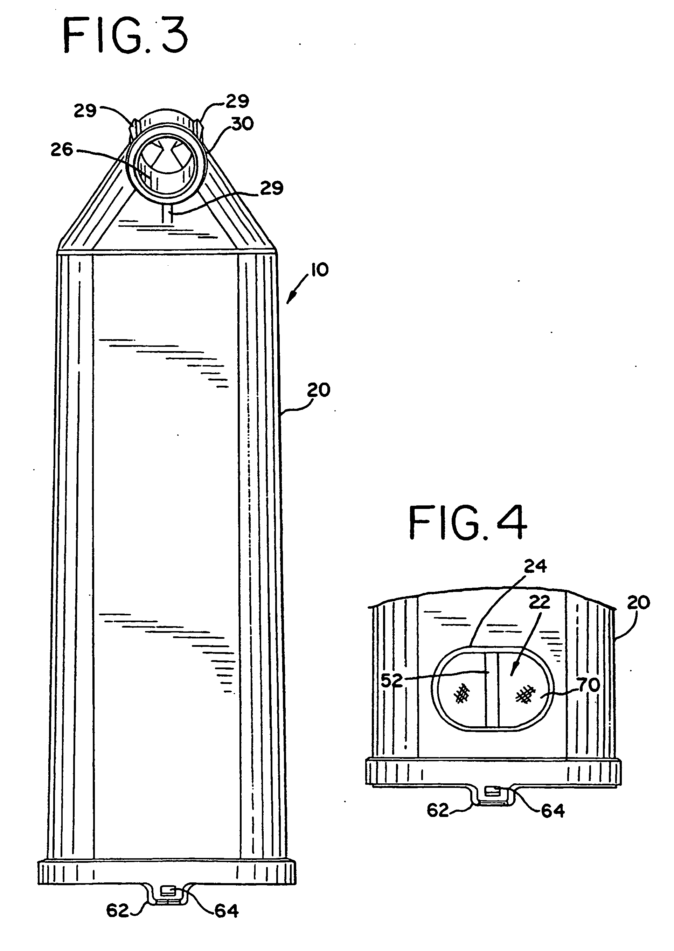

Sump filter assembly 10 includes three main components, namely: housing, generally designated 20; filter element, generally designated 40; and sealing member or O-ring, generally designated 80. Referring to Figs. 1 and 4, for example, housing 20 includes a main inlet 22 defined by main inlet wall 24. The inlet 22 is in direct fluid communication with the sump for automatic transmission fluid. An outlet 26, defined by outlet wall 28 is also provided, which is in direct fluid communication with a transmission fluid pump inlet or conduit leading to the fluid pump inlet. Outlet 26 is in fluid communication with transition section 30. Housing cavity 34 is in fluid communication with outlet 26 and inlet 22. Housing 20 is also provided with access way or hole 36 for allowing filter element 40 access into housing cavity 34 as will be explained further below.

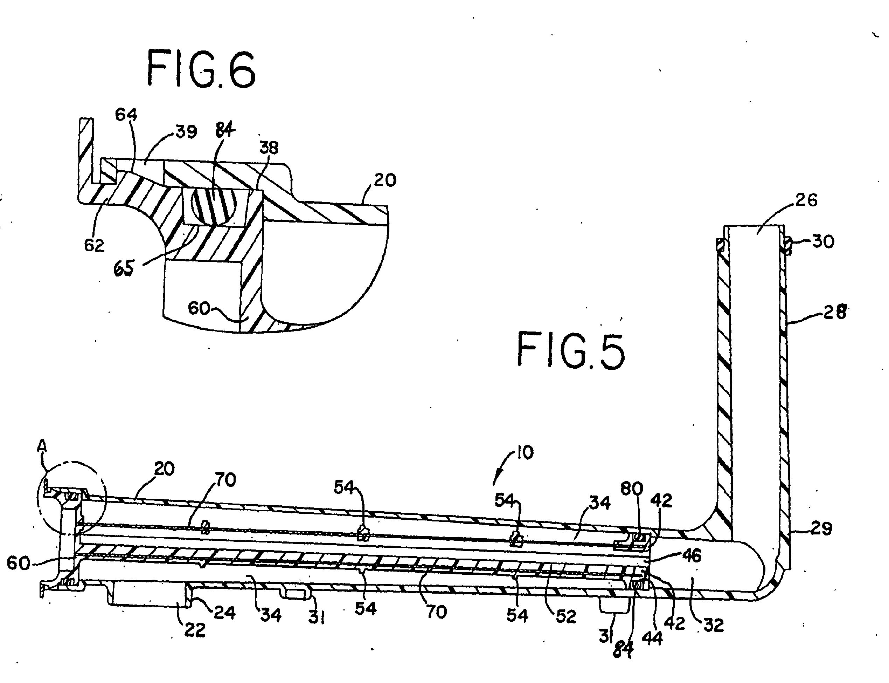

Filter element 40 includes filtration material 70, formed in the shape of an envelope, with an edge thereof embedded into the frame 42 of filter element 40. Frame 42 includes sealing member or O-ring retaining shoulder 44 that serves to retain sealing member or O-ring 80, as shown in Fig. 5. Frame 42 also provides for frame opening 46 that is in fluid communication with the filter envelope interior and outlet 26.

When filter element 40 is inserted into housing 20 via access 36, as shown in Fig. 1, into the final assembled configuration as shown in Fig. 5, a portion of housing cavity 34 is so dimensioned to receive frame 42 such that sealing member or O-ring 80, which is received within shoulder 44, sealingly engages the housing interior. When fully assembled, sump fluid may be drawn through inlet 22 and into housing cavity 34. Fluid then passes through filtration material 70 and into the material envelope interior, and does not to any appreciable degree pass around O-ring or sealing member 80. Fluid flows from the envelope interior through frame opening 46 and to inlet 26. This assembly thereby places the filtration material in the fluid flow path between inlet 22 and outlet 26 and thus also defines a filtered fluid cavity space in fluid communication with outlet 26 and an unfiltered fluid cavity space in fluid communication with inlet 22.

In the embodiment of Figs. 1-6, filter element 40 is provided with a plurality of ribs, including longitudinal ribs 52 and lateral ribs 54. Further, in this embodiment, filter element 40 is provided with an end wall member 60 into which an edge offiltration material 70 is embedded. In this embodiment, longitudinal ribs 52, lateral ribs 54, and end wall member 60 form a cage that protects filtration material 70 and may assist in defining the filtration material envelope. This embodiment also provides housing 20 with an outlet seal 30, as well as stiffeners 29, and stand offs 31.

As shown in detail in Fig. 6, an optional feature of this embodiment of the filter element 40 is tab 62 with detent surface 64. Recess 38, that is adjacent access 36, is provided with hole 39 to accommodate detent surface 64 to provide a positive snap fit when the filter element 40 is fully assembled into housing 20.

Also, as shown in detail in Fig. 6, another optional feature of this embodiment of the filter element 40 is an O-ring or sealing member retaining shoulder 64 provided in wall member 60. Shoulder 65 retains O-ring or gasket or sealing-member 84, and enables a sealing engagement of this member 84 with recess 38. With this optional feature, there would be no appreciable fluid passing into housing cavity 34 through access 36, for example. The foregoing optional features may be utilized simultaneously in an embodiment, as depicted in Fig. 6, or independently from one another.

The immediately foregoing optional features are directed to the embodiment shown in Figs. 1-6 wherein the filter element 40 is removable relative to the housing 20. However, in an alternative embodiment, and as can be appreciated by those skilled in the art, filter element 40 is not removably disposed in housing 20, but rather inserted into housing 20, and end wall 60 permanently sealed to housing 20 at an abutting surface therebetween. For example, such permanent seal surfaces are shown in Fig. 6 where end wall member 60 is in abutting relationship to housing 20. Such permanent seals may be effectuated by methods known by those of skill in the art, including, for example, adhesives and bonding agents, or if the pertinent portions of the structures are of the same or compatible thermoplastic materials, the materials can be heat-bonded (fused or melt bonded) together, or solvent bonded together. It is presently preferred to use sonic welding of the pertinent portions of the structures. It is to be noted that if a permanent seal about the periphery of end wall 60 is created, the above noted optional features are not required to effectuate a fluid tight seal about access 36.

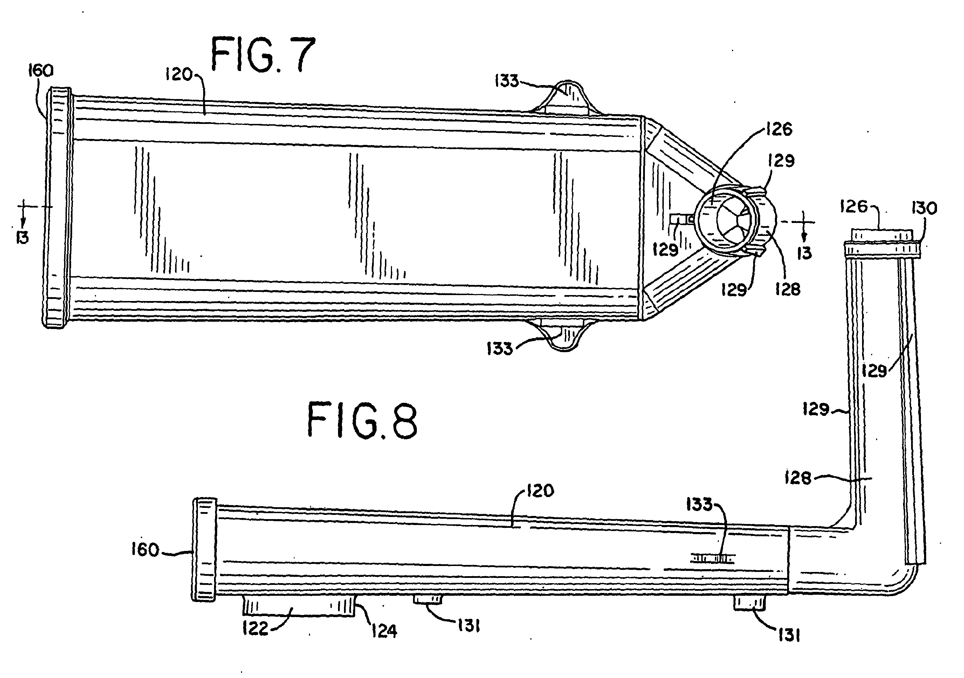

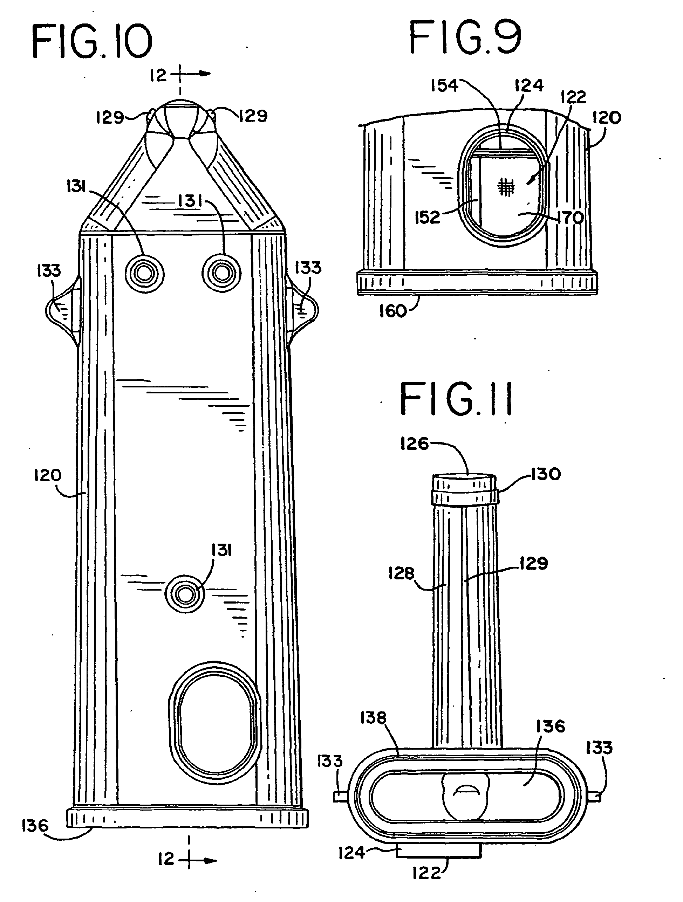

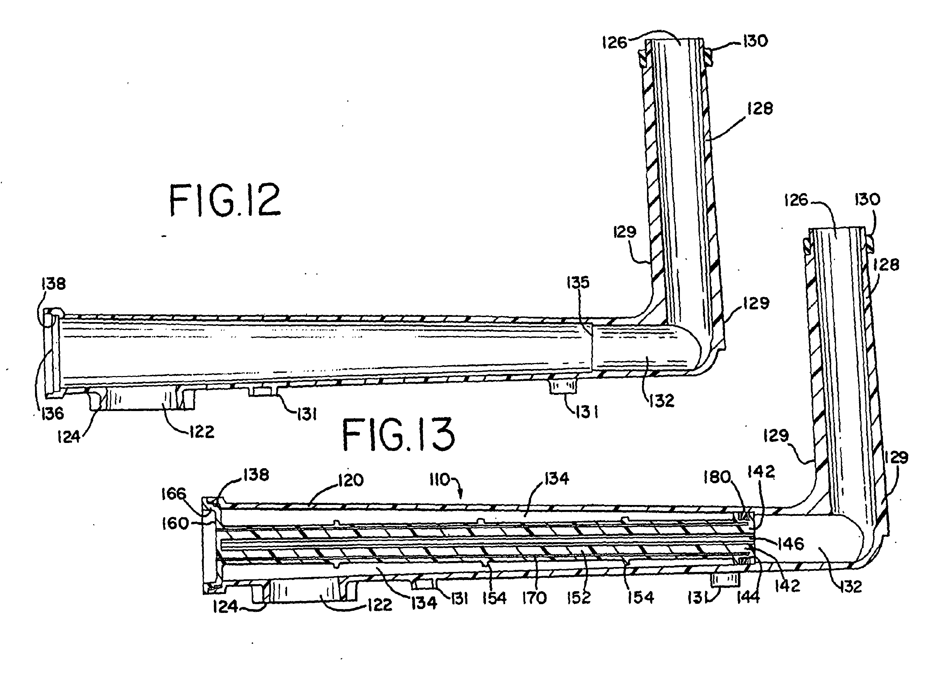

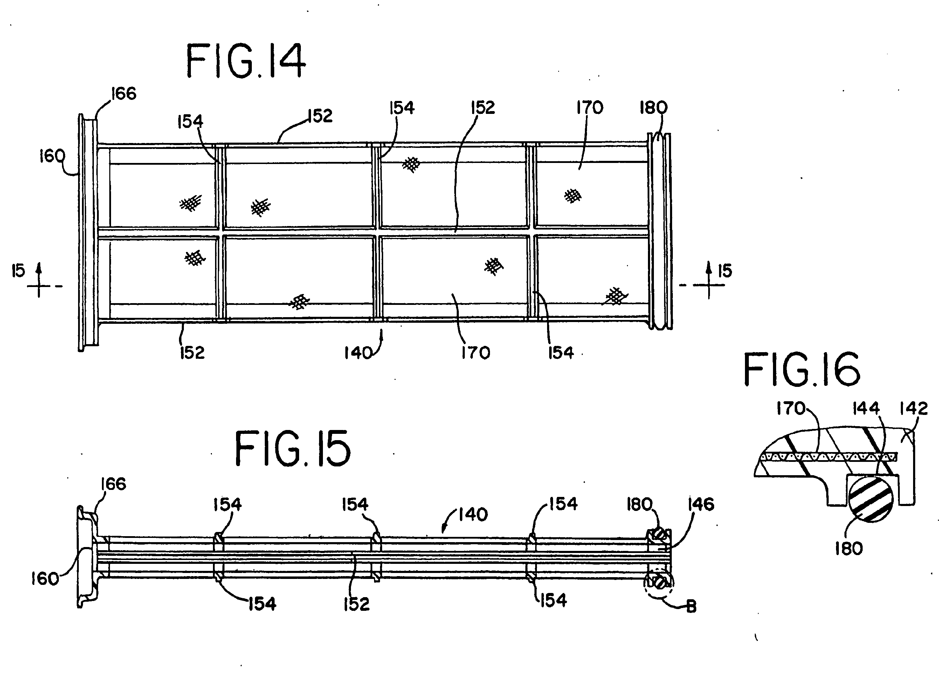

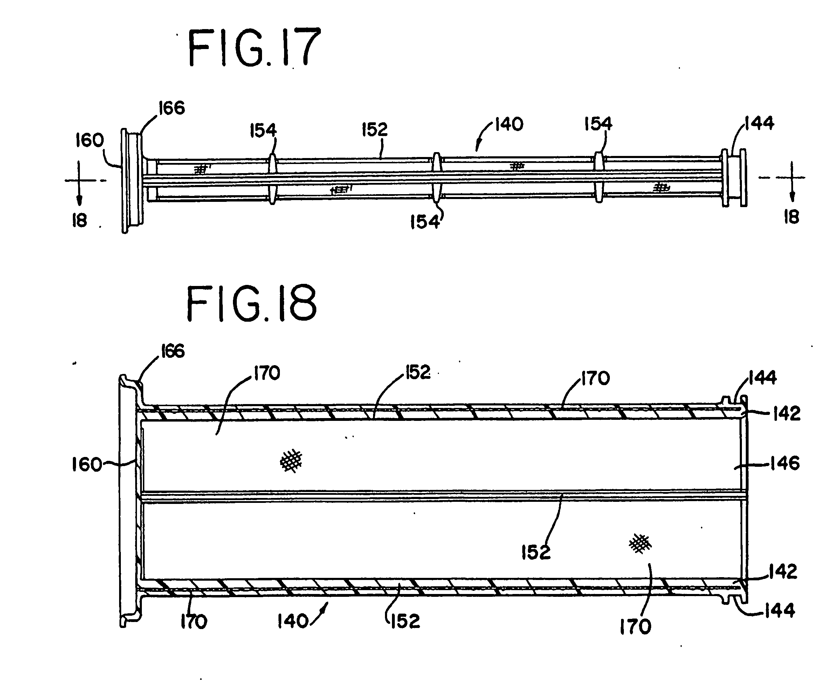

Figs. 7-18 show an alternative and presently preferred embodiment. As is readily noted from these figures, many of the features of the sump filter assembly depicted therein are similar to the features of sump filter assembly 10 (see Figs. 1-6), and accordingly these similar features have been denoted by numerical designations incremented by 100. Accordingly, when filter element 140 is inserted into housing 120 via access 136, similar to that shown in Fig. 1, and is placed into the final assembled configuration as shown in Fig. 13, a portion of housing cavity 134 is so dimensioned to receive frame 142 such that sealing member or O-ring 180, which is received within O-ring or sealing retaining shoulder 144 (see Fig. 16), sealingly engages the housing interior. When fully assembled, sump fluid may be drawn through inlet 122 and into housing cavity 134. Fluid then passes through filtration material 170 and into the material envelope interior, and does not to any appreciable degree pass around O-ring or sealing member 180. Fluid flows from the envelope interior through frame opening 146 and to inlet 126. This assembly thereby places the filtration material in the fluid flow path between inlet 122 and outlet 126 and thus also defines a filtered fluid cavity space in fluid communication with outlet 126 and an unfiltered fluid cavity space in fluid communication with inlet 122.

In the embodiment shown in Figs. 7-18, it is presently preferred to use standard plastic injection molding techniques known to those of skill in the art to insert filtration material 170 into an appropriately dimensioned injection mold cavity, and to injection mold a monolithic filter element cage comprising frame 142, ribs 152,154, and end wall member 160 to the filtration material 170 such that pertinent portions of the filtration material are embedded into the plastic of filter element 140. It is also presently preferred to use standard plastic injection molding techniques to fabricate housing 120. Further, it is preferred to provide housing 120 with internal recess 135 (see Fig. 12) that impedes the extent of insertion of filter element 140 into housing 120 and may assist in defining the housing interior surface against which the sealing member may seal. Also, the O-ring(s) and/or gasket member(s), and outlet seal may be snap fit onto the resulting molded structures prior to final assembly of the sump filter assembly.

Further, it should be appreciated that the embodiment of Figs. 7-18 may be configured such that the filter element 140 is removably disposed in housing 120. In this configuration, end wall member 160 is provided with flange 166 that abuts against recess 138 when sump filter assembly 110 is fully assembled (see, e.g. Fig. 13). In order to replace the filter element 140, end wall member 160 and/or flange 166 is grasped manually or mechanically to unseal the sealing member or O-ring from the cavity 134 interior and thus remove filter element 140 through access hole 136. Following cleaning of the full cavity 134, if desired, a new or clean filter element 140 may then be inserted into cavity 134 via access 136 to a fully assembled condition such as is shown in Fig. 13.

However, in an alternative embodiment to that depicted in Figs. 7-18 and as can be appreciated by those skilled in the art, filter element 140 is not removably disposed in housing 120, but rather inserted into housing 120 such that end wall flange 166 abuts against recess 138 of housing 120. A permanent seal may then be formed between the resulting abutting surfaces to permanently seal housing 120 at end wall 160. Such abutting surfaces are depicted in Fig. 13, for example. The permanent seal of this alternative embodiment may be effectuated by methods known to those of skill in the art, including, for example, adhesives and bonding agents, or if the pertinent portions of the structures are of the same or compatible thermoplastic materials, the materials can be heat-bonded (fused or melt bonded) together, or solvent bonded together. Further, permanent seals presently contemplated may be formed by laser weld, hot plate weld, induction weld, or vibration weld. It is presently preferred to use sonic welding of the pertinent portions of the structures, namely sonically welding the perimeter of end wall flange 166 to recess 138 of housing 120 to form a sonic shear weld.

As shown in detail in Figs. 7-8, an optional feature of this embodiment of the filter housing 120 are lateral stand offs 133. It has been found that standoffs 131 have been useful to locate the sump filter vertically in the sump to optimize fluid flow into the filter cavity, and that lateral standoffs 133 have been useful to locate the sump filter horizontally in the sump and to prevent undue dislocation of the sump filter and its inlet from their intended location during motor vehicle operation.

It will be appreciated that alternatives to the preferred embodiments disclosed herein may be appreciated by those of ordinary skill in the art that will fall within the scope of this invention. For example, although the preferred embodiment depicted herein uses a nylon 66, 30% glass filled for the housing, ribs, end wall, O-ring or sealing member retaining shoulder(s), and frame of the filter element, other plastics may be used. Exemplary materials include other nylon or polyester, glass filled, or other thermoplastic synthetic resins suitable for the operating environment and temperature extremes expected for the assembly. Also, although the filtration material for the preferred embodiment herein is a woven polyester monofilament rated at retaining 150 micron particles or larger, the composition and rating of the material may vary. Exemplary filtration materials include spun bond polyester media, polyester depth media, stainless steel mesh, nylon mesh or depth media, cellulosic material, or the like, and may be flat screen or pleated. Further, the media can be configured not only as an oval or elliptical cylinder, but also as a cone, frustum, or frusto-conical.

Moreover, although the filtration material of the preferred embodiment is embedded into the plastic of the filter element member, ribs, and end wall using a typical injection molding process, the filtration material may be attached to the salient portions of the filter element by other means. For example, adhesives and bonding agents can be used, or if the filtration material and the salient portions of the filter element cage are of the same or compatible thermoplastic materials, the materials can be heat-bonded (fused or melt bonded) together, or solvent bonded together, thus assuring an attachment between the materials.

Similarly, the filtration material may be formed into an envelope, with the edge or perimeter of the envelope that opens into the interior of the envelope being embedded into a filter element frame of any geometric form, such as a rectangle, oval, ellipse, circle or the like, with an O-ring or gasket member or sealing member retained about the frame. One or more plastic ribs or similar members may be further attached to the filter element frame to assure that the filtration material envelope does not collapse upon itself during filter assembly operation, and these ribs may be attached to the frame using suitable methods, including, for example, adhesives and bonding agents, or if the ribs and the salient portions of the frame are of the same or compatible thermoplastic materials, the materials can be heat-bonded (fused or melt bonded) together, or solvent bonded together. Further, the filtration material may be attached to one or more end wall members distinct from the frame to assure that the envelope does not collapse during filter assembly operation, and the attachment of the end wall to the frame and/or the ribs may be by way of similar attachment methods indicated above for the ribs. Thus, although the preferred embodiment is directed to a monolithically molded plurality of ribs in conjunction with an end wall and a frame with the filtration material envelope opening embedded into the frame, other attachment methods for attaching these structures together to form the filter element are expressly contemplated herein.

It is also to be noted that in all embodiments there is at least one sealing member that provides a seal preventing particles of 1 micron or more from passing between the housing cavity dirty space to the clean space. Such a sealing member includes an O-ring or gasket member that ensures a fluid tight seal between the filter element and the housing to separate the housing cavity into a dirty and clean fluid space. Sealing members other than O-rings or gasket members of synthetic or natural composition are expressly contemplated herein, such as one or more beads of silicone caulk or silicone based materials, or blade like structures either abutting against walls or overlapping one another or structures forming a cup seal or the like. Similarly, a plurality of separable O-rings and/or gasket members, or combination thereof, is also expressly contemplated herein as providing an appropriate seal as a sealing member.

Further, although the preferred composition of the O-ring or gasket member is an ethylene/acrylic elastomer based compound, and in particular compounds using Vamac® which is generally commercially available from E. I. Du Pont de Nemours and Co., other materials may be used that are suitable for the operating environment and temperature extremes expected for the assembly. Exemplary materials may also include fluoroelastomer compounds, such as compounds using Viton® which is generally commercially available from DuPont Dow Elastomers L.L.C., or nitrile rubber, or neoprene, or similar elastomers may be suitably used for the operating environment and temperature extremes expected for the assembly. Furthermore, as for the configuration of the O-ring or gasket member, although the preferred embodiment is configured having circular cross-, section, other geometries are contemplated, including an O-ring or gasket member of square or rectangular cross-section for example. Also in this regard, those of ordinary skill in the art may appreciate that a lubricant on the O-ring or gasket member may be used to assist with the assembly of the preferred embodiment into a fluid tight configuration, with such lubricants including a polytetrafluoroethylene (PTFE) coating or transmission fluid thereon. Similarly, the preferred embodiment includes an outlet seal, and this outlet seal is preferably of similar composition to the O-ring or gasket member discussed above.

The disclosed and claimed sump filter assembly has numerous advantages. The disclosed filter assembly by means of its construction involves a relatively simple manufacturing apparatus, yet provides a satisfactory resulting filter with an acceptable filtration rating and dirt holding capacity. Further, the disclosed apparatuses may be produced using a relatively uncomplicated manufacturing environment using typical injection molding machines. The disclosed sump filter assembly is economical to produce and results in an efficiently performing filter assembly suitably configured for its intended sump filtering application.

## Claims

1. An automatic transmission sump filter assembly (10) in fluid communication with the inlet of an automatic transmission fluid pump, **characterised by** the combination of the following features:
(a) a filter housing (20, 120) including a bottom portion with one or more members (31, 131) extending from the bottom portion and adapted to engage the sump, having a filter chamber (34, 134), an inlet (22, 122) in fluid communication with the filter chamber (34, 134), and an outlet member (26, 126) in fluid communication with the filter chamber and angularly extending from the housing (20, 120) and defining the inlet of the automatic transmission fluid pump, wherein the outlet member (26, 126) includes one or more stiffeners (29, 129) extending along the exterior of the outlet member (26, 126) and terminating before the inlet of the automatic transmission fluid pump to form one or more ends;
(b) at least one outlet sealing member (30, 130) disposed on the outlet member (26, 126) and engaged against the one or more stiffener (29, 129) ends, wherein the outlet sealing member (30, 130) is in sealing engagement with the outlet member (26, 126) and the fluid pump inlet and, wherein the outlet sealing member (30, 130) abuts one or more stiffener (29, 129) ends;
(c) filtration material (70, 170) forming an envelope;
(d) a plastic filter element (40, 140) removably disposed in the filter chamber (34, 134), the plastic filter element (40, 140) having a frame (42, 142) and a filtration material (70, 170), the filtration material (70, 170) having at least one edge embedded in the frame and the frame having at least one shoulder (44, 144) adapted to receive at least one sealing member (80, 180) and,
(e) the said at least one sealing member (80, 84, 180) disposed in said frame shoulder (44, 144) is in sealing engagement with the filter housing (20, 120) and the filter element (40, 140).

2. The automatic transmission sump filter assembly for claim 1 further comprising at least one plastic rib (52, 54, 152, 154) attached to the plastic filter element (40, 140) and supporting the filtration material (70, 170).

3. The automatic transmission sump filter assembly of claim 2, wherein the plastic filter element further comprises an end wall member (60, 160) attached to the at least one plastic rib (52, 54, 152, 154) with a portion of the filtration material (70) embedded into the end wall member (60, 160).

4. The automatic transmission sump filter assembly of any of the claims 1 to 3, wherein the sealing member (80, 180) comprises at least one O-ring (80, 180), and the shoulder (44, 144) is adapted to retain the at least one O-ring (80).

5. The automatic transmission sump filter assembly of any of the claims 1 to 4, wherein the filtration material (70, 170) is chosen from the group consisting of polyester, nylon, stainless steel and cellulose.

6. The sump filter assembly of any of the claims 1 to 5, wherein the chamber (34, 134) is having an access hole (36, 136); and wherein the filter element (40, 140) is removably disposed and accessible through the housing access hole (36).

7. The sump filter assembly of any of the claims 1 to 6, wherein the plastic member (42, 142), the end wall member (60, 160), and at least one plastic rib (52, 54, 152, 154) are monolithically molded.

8. The sump filter assembly of any of the claims 1 to 7, further comprising a plurality of plastic ribs (52, 54, 152, 154) extending between the plastic member (42, 142) and the end wall member (60, 160), whereby a rib cage support structure for filtration material (70, 170) is formed.

9. The sump filter assembly of any of the claims 1 to 3 and 5 to 8, wherein at least one sealing member is at least one gasket member (84).

10. The sump filter assembly of any of the claims 1 to 9, wherein the filter element (140) is sonically welded to the housing access hole (136) perimeter and the filter element (140) further comprises an end wall member (160) attached to the at least one plastic rib (152, 154) with a portion of the filtration material (170) embedded into the end wall member (160).

11. The sump filter assembly of any of the claims 1 to 10, wherein the housing (20, 120) is a monolithic housing.

## Patentansprüche

1. Ölwannenfilteranordnung (10) für automatische Getriebe in flüssigkeitsführender Verbindung mit dem Einlass einer Pumpe für automatische Getriebeflüssigkeit, **gekennzeichnet durch** die Kombination folgender Merkmale:
(a) ein Filtergehäuse (20, 120) einschließlich eines Bodenabschnitts mit einem oder mehreren, vom Bodenabschnitt (31, 131) ausgehenden Teilen, geeignet für den Eingriff mit der Ölwanne, mit einer Filterkammer (34, 134), einem Einlass (22, 122) in flüssigkeitsführender Verbindung mit der Filterkammer (34, 134) und einem Auslassteil (26, 126) in flüssigkeitsführender Verbindung mit der Filterkammer und von dem Gehäuse (20, 120) im Winkel ausgehend und den Einlass zur Pumpe der automatischen Getriebeflüssigkeit bildend, wobei der Auslassteil (26, 126) ein oder mehrere Versteifungen (29, 129) aufweist, die sich längs des Äußeren des Auslassteils (26, 126) erstrecken und vor dem Einlass der Pumpe der automatischen Getriebeflüssigkeit enden, um eines oder mehrere Enden zu bilden;
(b) mindestens einen Dichtteil (30, 130), der an dem Auslassteil (26, 126) angeordnet ist und mit dem einen oder mehreren Enden der Versteifungen (29, 129) steht, wobei der Auslassdichtteil (30, 130) in dichtendem Eingriff mit dem Auslassteil (26, 126) und dem Einlass der Flüssigkeitspumpe steht, und wobei der Auslassdichtteil (30, 130) an einem oder mehreren der Enden der Versteifungen (29, 129) anliegt;
(c) Filtermaterial (70, 170), welches eine Hülle bildet;
(d) ein aus Kunststoff bestehendes Filterelement (40, 140), welches herausnehmbar in der Filterkammer (34, 134) angeordnet ist, wobei das Kunststofffilterelement (40, 140) einen Rahmen (42, 142) und ein Filtermaterial (70, 170) aufweist, das Filtermaterial (70, 170) mit mindestens einer Kante in den Rahmen eingebettet ist und der Rahmen mindestens eine Schulter (44, 144) aufweist, welche für die Aufnahme mindestens eines Dichtteils (80, 180) ausgestaltet ist, und
(e) der mindestens eine Dichtteil (80, 84, 180), der in der Schulter (44, 144) angeordnet ist, steht in dichtendem Eingriff mit dem Filtergehäuse (20, 120) und dem Filterelement (40, 140).

2. Ölwannenfilteranordnung für automatische Getriebe nach Anspruch 1, ferner umfassend mindestens eine Kunststoffrippe (52, 54, 152, 154), die an dem Kunststofffilterelement (40, 140) angebracht ist und das Filtermaterial (70, 170) trägt.

3. Ölwannenfilteranordnung für automatische Getriebe nach Anspruch 2, wobei das Kunststofffilterelement ferner einen Endwandungsteil (60, 160) aufweist, der an der mindestens einen Kunststoffrippe (52, 54, 152, 154) angebracht ist, wobei ein Teil des Filtermaterials (70) in dem Endwandungsteil (60, 160) eingebettet ist.

4. Ölwannenfilteranordnung für automatische Getriebe nach einem der Ansprüche 1 bis 3, wobei der Dichtteil (80, 180) mindestens einen O-Ring (80, 180) umfasst und die Schulter (44, 144) geeignet ist, den mindestens einen O-Ring (80) zu halten.

5. Ölwannenfilteranordnung für automatische Getriebe nach einem der Ansprüche 1 bis 4, wobei das Filtermaterial (70, 170) aus der aus Polyester, Nylon, rostfreiem Stahl und Zellulose bestehenden Gruppe gewählt ist.

6. Ölwannenfilteranordnung nach einem der Ansprüche 1 bis 5, wobei die Kammer (34, 134) eine Zugangsöffnung (36, 136) aufweist und wobei das Filterelement (40, 140) durch die Zugangsöffnung (36) des Gehäuses herausnehmbar und zugänglich ist.

7. Ölwannenfilteranordnung nach einem der Ansprüche 1 bis 6, wobei der Kunststoffteil (42, 142), der Endwandungsteil (60, 160) und mindestens eine Kunststoffrippe (52, 54, 152, 154) einstückig gegossen sind.

8. Ölwannenfilteranordnung nach einem der Ansprüche 1 bis 7, ferner umfassend eine Vielzahl von Kunststoffrippen (52, 54, 152, 154), welche sich zwischen dem Kunststoffteil (42, 142) und dem Endwandungsteil (60, 160) erstrecken, wodurch eine Rippenkäfigtragstruktur für das Filtermaterial (70, 170) geformt wird.

9. Ölwannenfilteranordnung nach einem der Ansprüche 1 bis 3 und 5 bis 8, wobei mindestens ein Dichtteil mindestens ein Dichtungsteil (84) ist.

10. Ölwannenfilteranordnung nach einem der Ansprüche 1 bis 9, wobei das Filterelement (140) an dem Umfang der Zugangsöffnung (136) des Gehäuses durch Ultraschallschweißen angeschweißt ist und das Filterelement (140) ferner einen Endwandungsteil (160) aufweist, der an der mindestens einen Kunststoffrippe (152, 154) angebracht ist, wobei ein Teil des Filtermaterials (170) in den Endwandungsteil (160) eingebettet ist.

11. Ölwannenfilteranordnung nach einem der Ansprüche 1 bis 10, wobei das Gehäuse (20, 120) ein einstückiges Gehäuse ist.

## Revendications

1. Ensemble de filtre (10) pour carter d'huile de transmission automatique en communication de fluide avec l'entrée d'une pompe à fluide de transmission automatique, **caractérisé par** la combinaison des caractéristiques suivantes :
(a) un boîtier de filtre (20, 120) comprend une partie inférieure avec un ou plusieurs éléments (31, 131) s'étendant à partir de la partie inférieure et adapté pour s'accrocher au carter d'huile, ayant une chambre de filtre (34, 134), une entrée (22, 122) en communication de fluide avec la chambre de filtre (34, 134) et un élément de sortie (26, 126) en communication de fluide avec la chambre de filtre et s'étendant de manière angulaire à partir du boîtier (20, 120) et définissant l'entrée de la pompe à fluide de transmission automatique, dans lequel l'élément de sortie (26, 126) comprend un ou plusieurs raidisseurs (29, 129) s'étendant le long de l'extérieur de l'élément de sortie (26, 126) et se terminant avant l'entrée de la pompe à fluide de transmission automatique pour former une ou plusieurs extrémités ;
(b) au moins un élément d'étanchéité de sortie (30, 130) disposé sur l'élément de sortie (26, 126) et raccordé contre une ou plusieurs extrémités de raidisseur (29, 129), dans lequel l'élément d'étanchéité de sortie (30, 130) est en relié de façon étanche avec l'élément de sortie (26, 126) et l'entrée de pompe de fluide et dans lequel l'élément d'étanchéité de sortie (30, 130) vient en butée contre une ou plusieurs des extrémités de raidisseur (29, 129) ;
(c) un matériau de filtration (70, 170) formant une enveloppe ;
(d) un élément filtrant en plastique (40, 140) disposé de manière amovible dans la chambre de filtre (34, 134), l'élément filtrant en plastique (40, 140) ayant un châssis (42, 142) et un matériau de filtration (70, 170), le matériau de filtration (70, 170) ayant au moins un bord enfoncé dans le châssis et le châssis ayant au moins un épaulement (44, 144) adapté pour recevoir au moins un élément d'étanchéité (80, 180) et
(e) ledit au moins un élément d'étanchéité (80, 84, 180) disposé dans ledit épaulement de châssis (44, 144) est en contact étanche avec le boîtier de filtre (20, 120) et l'élément filtrant (40, 140).

2. Ensemble de filtre pour carter d'huile de transmission automatique selon la revendication 1, comprenant en outre au moins une nervure en plastique (52, 54, 152, 154) fixée à l'élément filtrant en plastique (40, 140) et supportant le matériau de filtration (70, 170).

3. Ensemble de filtre pour carter d'huile de transmission automatique selon la revendication 2, dans lequel l'élément filtrant en plastique comprend en outre un élément de paroi d'extrémité (60, 160) fixé sur la au moins une nervure en plastique (52, 54, 152, 154) avec une partie du matériau de filtration (70) enfoncée dans l'élément de paroi d'extrémité (60, 160).

4. Ensemble de filtre pour carter d'huile de transmission automatique selon l'une quelconque des revendications 1 à 3, dans lequel l'élément d'étanchéité (80, 180) comprend au moins un joint torique (80, 180) et l'épaulement (44, 144) est adapté pour retenir le au moins un joint torique (80).

5. Ensemble de filtre pour carter d'huile de transmission automatique selon l'une quelconque des revendications 1 à 4, dans lequel le matériau de filtration (70, 170) est choisi dans le groupe comprenant le polyester, le nylon, l'acier inoxydable et la cellulose.

6. Ensemble de filtre pour carter d'huile selon l'une quelconque des revendications 1 à 5, dans lequel la chambre (34, 134) a un trou d'accès (36, 136) ; et dans lequel l'élément filtrant (40, 140) est disposé de manière amovible et accessible en passant par le trou d'accès (36) de boîtier.

7. Ensemble de filtre pour carter d'huile selon l'une quelconque des revendications 1 à 6, dans lequel l'élément en plastique (42, 142), l'élément de paroi d'extrémité (60, 160), et au moins une nervure en plastique (52, 54, 152, 154) sont moulés de manière monolithique.

8. Ensemble de filtre pour carter d'huile selon l'une quelconque des revendications 1 à 7, comprenant en outre une pluralité de nervures en plastique (52, 54, 152, 154) s'étendant entre l'élément en plastique (42, 142) et l'élément de paroi d'extrémité (60, 160), moyennant quoi une structure de support de cage de nervure pour le matériau de filtration (70, 170) est formée.

9. Ensemble de filtre pour carter d'huile selon l'une quelconque des revendications 1 à 3 et 5 à 8, dans lequel au moins un élément d'étanchéité est au moins un élément de joint (84).

10. Ensemble de filtre pour carter d'huile selon l'une quelconque des revendications 1 à 9, dans lequel l'élément filtrant (140) est soudé par ultrason et vibration sur le périmètre du trou d'accès (136) de boîtier et l'élément filtrant (140) comprend en outre un élément de paroi d'extrémité (160) fixé sur la au moins une nervure en matière plastique (152, 154) avec une partie du matériau de filtration (170) enfoncé dans l'élément de paroi d'extrémité (160).

11. Ensemble de filtre pour carter d'huile selon l'une quelconque des revendications 1 à 10, dans lequel le boîtier (20, 120) est un boîtier monolithique.
